# EUROPEAN PATENT APPLICATION

(11) **EP 4 648 016 A1**
(43) Date of publication of application: **12.11.2025**
(21) Application number: 23919300.6
(22) Date of filing: 21.08.2023
(51) Int. Cl.: G06T 15/50, G06T 15/06

(54) **RELIGHTING METHOD AND APPARATUS**

(30) Priority: 03.02.2023 CN 202310122687
(71) Applicant: Huawei Technologies Co., Ltd., Shenzhen, Guangdong 518129 (CN)
(72) Inventor: PENG, Lu, Shenzhen, Guangdong 518129 (CN); XU, Hai, Shenzhen, Guangdong 518129 (CN); FAN, Yanping, Shenzhen, Guangdong 518129 (CN); ZHANG, Liang, Shenzhen, Guangdong 518129 (CN)
(74) Representative: Epping - Hermann - Fischer
(86) International application number: PCT/CN2023/113958
(87) International publication number: WO 2024/159735

(57) **Abstract**

Embodiments of this application provide a relighting method. The method includes: obtaining a first image, a first location, and light source information (310), where the first image includes a portrait of a first user, the first location indicates location information of the first user in a preset scene, and the light source information includes a location of a light source in the scene and lighting information of the light source; determining first optical reflection information of the first user based on the first image and the first location (320), where the first optical reflection information indicates a light reflection status of a body surface of the first user at the first location; and obtaining a second image through rendering based on the first image, the light source information, and the first optical reflection information (330), where the second image includes a portrait obtained through relighting on the first user at the first location in the scene based on the light source information. In the technical solutions of this application, a relighted portrait of a user can be generated based on location information of the user, so that a lighting result of the generated image conforms to an actual situation, and a sense of reality of an online conference is improved.

## Description

This application claims priority to Chinese Patent Application No. 202310122687.5, filed with the China National Intellectual Property Administration on February 3, 2023 and entitled "RELIGHTING METHOD AND APPARATUS", which is incorporated herein by reference in its entirety.

### TECHNICAL FIELD

Embodiments of this application relate to the computer field, and specifically, to a relighting method and an apparatus.

### BACKGROUND

With the development of remote video technologies, people have higher requirements on video conferences and hope that online conferences can provide the same real experience as offline conferences. Therefore, there are an increasing quantity of virtual conference rooms. In the virtual conference room, portraits of participants can be synthesized with a scenario of an offline conference, to simulate a real conference scenario.

In a video conference, in most cases, each person attends the conference in a different place. For example, each person attends the conference at home. Because environments in which persons are located are different, lighting conditions of places in which the persons are located are also different. In this case, directly extracting a portrait of each participant and then synthesizing the portrait with the background may cause a strong sense of incongruity.

Therefore, how to improve a sense of reality of an online conference is an urgent technical problem to be resolved.

### SUMMARY

Embodiments of this application provide a relighting method and an apparatus, which can be used to generate a relighted image based on location information of a user in a preset scene, so that a lighting result of the generated image conforms to an actual situation, to improve a sense of reality of an online conference.

According to a first aspect, a relighting method is provided. The method includes: obtaining a first image, a first location, and light source information, where the first image includes a portrait of a first user, the first location indicates location information of the first user in a preset scene, and the light source information includes a location of a light source in the scene and lighting information of the light source; determining first optical reflection information of the first user based on the first image and the first location, where the first optical reflection information indicates a light reflection status of a body surface of the first user at the first location; and obtaining a second image through rendering based on the first image, the light source information, and the first optical reflection information, where the second image includes a portrait obtained through relighting on the first user at the first location in the scene based on the light source information.

Embodiments of this application provide a relighting method, which can be used to generate a relighted image based on location information of a user in a preset scene, so that a lighting result of the generated image conforms to an actual situation, to improve a sense of reality of an online conference.

It should be understood that the first image is portrait data that does not include a background. In a possible implementation, the first image is a portrait extracted from an image including the background and the portrait.

In a possible application scenario, for a video conference, at least one camera collects, in real time, a picture corresponding to the conference, and then extracts the portrait of the first user from the picture. The picture may include a plurality of users, and the first user is one of the plurality of users. Alternatively, the picture may include only the first user. In a possible application scenario, a picture corresponding to a conference may be pre-stored. During the video conference, a picture that is of a conference access terminal and that includes a portrait, for example, a static portrait picture, a cartoon picture, a three-dimensional (three-dimensional, 3D) portrait model, or a 3D game character, is obtained through a network. Optionally, a user identity document (identity document, ID) of the conference access terminal may alternatively be identified, and a portrait corresponding to the ID may be found from a preset candidate gallery.

It should be understood that the portrait may include a head, an upper body, or a whole body of a person. This is not limited in this application. The portrait may include a portrait picture obtained through background segmentation, a portrait contour image corresponding to segmentation, or contour coordinates.

It should be understood that the first location indicates the location information of the first user in the preset scene, for example, two-dimensional coordinates in a two-dimensional scene, three-dimensional coordinates in a three-dimensional scene, or coordinates or a location number of a virtual seat of the first user.

It should be understood that the light source information in this application may include information about one or more light sources.

With reference to the first aspect, in some implementations of the first aspect, the method further includes: obtaining a background image, where the background image is an image including the scene, and the first location is a location of the portrait of the first user in the background image; and generating a first composite image based on the background image and the second image, where the first composite image includes an effect drawing of the first user at the first location in the background image.

The background image includes a background picture used to finally generate a relighted image. The background image may be a common two-dimensional image, for example, a picture of a classroom, a conference room, or a study with a desk. The background image may alternatively be a three-dimensional virtual background, for example, a room model with a seat, for example, a classroom or a conference room, output through three-dimensional modeling.

Embodiments of this application provide a relighting method, so that a relighted portrait can be generated based on location information of a user in a preset scene. After the relighted portrait is fused with a background, a lighting condition that the user is actually at a specific location in the background image is met, and lighting effect conforms to an actual situation. This improves a sense of reality of an online conference.

With reference to the first aspect, in some implementations of the first aspect, determining the first optical reflection information of the first user based on the first image and the first location includes: determining a body reflectivity of the first user and a body surface normal vector of the first user in a global coordinate system based on the first image and the first location, where the global coordinate system is a coordinate system established based on the background image.

For example, information about a surface normal vector and a reflectivity of the first user may be extracted through a neural network based on an input portrait picture. In this case, the calculated surface normal vector of the user is a vector representation centered on the first user, and coordinates of the user in the global coordinate system further need to be used to translate the surface normal vector of the user into a vector representation in the global coordinate system. The neural network may be a convolutional neural network (convolutional neural networks, CNN), a recursive neural network (recursive neural network, RNN), a long short-term memory (long short-term memory, LSTM) network, or the like. A specific type of the neural network is not limited in this application.

In some possible implementations, the information about the surface normal vector and the reflectivity of the first user may alternatively be obtained based on a portrait picture and a mapping table or a function relationship.

In some possible implementations, the portrait picture and the first location may alternatively be directly input into the neural network, to directly obtain the body reflectivity of the first user and the body surface normal vector of the first user in the global coordinate system.

Embodiments of this application provide a relighting method, so that a body reflectivity of a user and a body surface normal vector of the user in a global coordinate system can be obtained based on location information of the user in a preset scene, and a relighted image can be generated based on the reflectivity and the surface normal vector. In this way, a lighting result of the generated image better conforms to an actual situation, and a sense of reality of an online conference is improved.

With reference to the first aspect, in some implementations of the first aspect, the method further includes: obtaining a third image and a second location, where the third image includes a portrait of a second user, and the second location indicates location information of the second user in the scene; determining second optical reflection information of the second user based on the third image and the second location, where the second optical reflection information indicates a light reflection status of a body surface of the second user at the second location; determining a fourth image based on the third image, the light source information, and the second optical reflection information, where the fourth image includes a portrait obtained through relighting on the second user at the second location in the scene based on the light source information; and generating a second composite image based on the background image, the second image, and the fourth image, where the second composite image includes an effect drawing on which the first user and the second user are at corresponding locations in the background image.

Optionally, the second user may alternatively be a plurality of users. The method provided in this application may alternatively be used to synthesize a relighting effect drawing of the plurality of users in a same frame. Location information of the plurality of users in a background picture, for example, coordinates of virtual seats, may be preset. For example, sorting may be performed based on a user ID, sorting may be performed based on access time, sorting may be performed based on an initial letter of a user name, or the like. Optionally, location information may alternatively be input by a user in a customized manner, or a seat may be automatically recognized and given coordinates according to a seat recognition algorithm after a virtual background is selected. A process of relighting a portrait of each of the plurality of users is similar to a process of relighting the portrait of the first user. Details are not described again in this application.

Embodiments of this application provide a relighting method, which is applicable to a relighting scene in which a plurality of persons are in a same frame. Different impacts of light at different locations on each user in the scene are considered, so that a generated same-frame image is close to reality and natural.

With reference to the first aspect, in some implementations of the first aspect, the light source information includes a parameter or an image related to the light source.

It should be understood that the light source information in embodiments of this application may be input in a form of a parameter or an image. For example, the light source information is input in a parameterized form, and information such as three-dimensional or two-dimensional coordinates, light intensity, a color temperature, or saturation of the light source may be specified. Optionally, the light source information may alternatively be extracted from an input lighted reference image. For example, the reference image may be the foregoing background picture. For example, the light source information in the reference lighted picture is extracted through the neural network.

Embodiments of this application provide a relighting method. Light source information may be input in a form of a parameter or an image. A light source is defined more flexibly, and is applicable to a plurality of scenarios such as two-dimensional, three-dimensional, and multi-light source scenarios.

With reference to the first aspect, in some implementations of the first aspect, the light source information changes with time.

It should be understood that both a coordinate location of the light source and the lighting information of the light source may change with time.

In a possible implementation of a variable light source, a function of the light source that changes with time may be preset. For example, f(t) indicates a light source function, and f(t) may be a continuous function that changes with time, and is used to simulate light source effect of the sun rising in the east and falling in the west. Optionally, f(t) may alternatively be a segment function, t is time, and t may include three time periods: morning, noon, and night.

In another possible implementation of the variable light source, a mapping table of the light source that changes with time may be preset. The time t is read by a system or input by the user. Corresponding light source information (a light source location, intensity, saturation, and the like) is obtained based on the currently obtained time t through the preset lookup table.

In another possible implementation of the variable light source, the light source may be represented through a plurality of different light source pictures, and each picture represents one piece of light source information corresponding to time. For example, there is a light source picture in the morning, at noon, and at night each to indicate corresponding light source information.

Embodiments of this application provide a relighting method, to consider a scenario in which a light source changes with time, so that lighting effect of a generated relighted image is more vivid, real, and diversified.

With reference to the first aspect, in some implementations of the first aspect, the lighting information of the light source includes any one or more of light intensity, a color temperature, an incident direction, and saturation of the light source.

With reference to the first aspect, in some implementations of the first aspect, obtaining the second image through rendering based on the first image, the light source information, and the first optical reflection information includes: obtaining the second image through rendering in a manner of ray tracing or by using a neural network model based on the first image, the light source information, and the first optical reflection information.

Embodiments of this application provide a relighting method, which can be used to generate a relighted image in a manner of ray tracing or by using a neural network model based on location information of a user in a preset scene, so that a lighting result of the generated image conforms to an actual situation, and a sense of reality of an online conference is improved.

According to a second aspect, an embodiment of this application provides a computer apparatus. The apparatus includes: an obtaining module, configured to obtain a first image, a first location, and light source information, where the first image includes a portrait of a first user, the first location indicates location information of the first user in a preset scene, and the light source information includes a location of a light source in the scene and lighting information of the light source; and a processing module, configured to determine first optical reflection information of the first user based on the first image and the first location, where the first optical reflection information indicates a light reflection status of a body surface of the first user at the first location. The processing module is further configured to obtain a second image through rendering based on the first image, the light source information, and the first optical reflection information, where the second image includes a portrait obtained through relighting on the first user at the first location in the scene based on the light source information.

With reference to the second aspect, in some implementations of the second aspect, the obtaining module is further configured to obtain a background image, where the background image is an image including the scene, and the first location is a location of the portrait of the first user in the background image. The processing module is further configured to generate a first composite image based on the background image and the second image, where the first composite image includes an effect drawing of the first user at the first location in the background image.

With reference to the second aspect, in some implementations of the second aspect, the processing module is specifically configured to determine a body reflectivity of the first user and a body surface normal vector of the first user in a global coordinate system based on the first image and the first location, where the global coordinate system is a coordinate system established based on the background image.

With reference to the second aspect, in some implementations of the second aspect, the obtaining module is further configured to obtain a third image and a second location, where the third image includes a portrait of a second user, and the second location indicates location information of the second user in the scene. The processing module is further configured to determine second optical reflection information of the second user based on the third image and the second location, where the second optical reflection information indicates a light reflection status of a body surface of the second user at the second location. The processing module is further configured to determine a fourth image based on the third image, the light source information, and the second optical reflection information, where the fourth image includes a portrait obtained through relighting on the second user at the second location in the scene based on the light source information. The processing module is further configured to generate a second composite image based on the background image, the second image, and the fourth image, where the second composite image includes an effect drawing on which the first user and the second user are at corresponding locations in the background image.

With reference to the second aspect, in some implementations of the second aspect, the light source information includes a parameter or an image related to the light source.

With reference to the second aspect, in some implementations of the second aspect, the light source information changes with time.

With reference to the second aspect, in some implementations of the second aspect, the lighting information of the light source includes any one or more of light intensity, a color temperature, an incident direction, and saturation of the light source.

With reference to the second aspect, in some implementations of the second aspect, the processing module is specifically configured to obtain the second image through rendering in a manner of ray tracing or by using a neural network model based on the first image, the light source information, and the first optical reflection information.

Beneficial effect of any one of the second aspect and the possible implementations of the second aspect corresponds to the beneficial effect of any one of the first aspect and the possible implementations of the first aspect. This is not described herein again.

According to a third aspect, an embodiment of this application provides a computer apparatus. The computer apparatus includes a processor. The processor is configured to: be coupled to a memory, and read and execute instructions and/or program code in the memory, to perform any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, an embodiment of this application provides a chip system. The chip system includes a logic circuit, and the logic circuit is configured to: be coupled to an input/output interface, and perform transmission of data through the input/output interface, to perform any one of the first aspect or the possible implementations of the first aspect.

According to a fifth aspect, an embodiment of this application provides a computer-readable storage medium. The computer-readable storage medium stores program code. When the computer storage medium is run on a computer, the computer is enabled to perform any one of the first aspect or the possible implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a nonvolatile storage medium.

According to a sixth aspect, an embodiment of this application provides a computer program product. The computer program product includes computer program code, and when the computer program code is run on a computer, the computer is enabled to perform any one of the first aspect or the possible implementations of the first aspect.

### BRIEF DESCRIPTION OF DRAWINGS

FIG. 1 is a diagram of a conference scenario according to an embodiment of this application;
FIG. 2 is a diagram of a system architecture of a video conference according to an embodiment of this application;
FIG. 3 is an example flowchart of a relighting method according to an embodiment of this application;
FIG. 4 is a diagram of an architecture of a video module according to an embodiment of this application;
FIG. 5 is an example flowchart of another relighting method according to an embodiment of this application;
FIG. 6 is a diagram of effect of a relighted image according to an embodiment of this application;
FIG. 7 is an example flowchart of relighting according to an embodiment of this application;
FIG. 8 is a diagram of determining coordinates of a user according to an embodiment of this application;
FIG. 9 is a diagram of extracting a surface normal vector and a reflectivity according to an embodiment of this application;
FIG. 10 is a diagram of relighting rendering according to an embodiment of this application;
FIG. 11 is an example flowchart of another relighting method according to an embodiment of this application;
FIG. 12 is a diagram of a variable light source according to an embodiment of this application;
FIG. 13 is a diagram of an example of a structure of a computer apparatus according to an embodiment of this application;
FIG. 14 is a diagram of an example of a structure of another computer apparatus according to an embodiment of this application; and
FIG. 15 is a diagram of an example of a computer program product according to an embodiment of this application.

### DESCRIPTION OF EMBODIMENTS

The following describes technical solutions of embodiments of this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, the term like "example" or "for example" is for representing giving an example, an illustration, or a description. Any embodiment or design scheme described as an "example" in this application should not be explained as being more preferred or having more advantages than another embodiment or design scheme. Exactly, the term "for example" is used to present a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

For ease of understanding of embodiments of this application, some definitions in this application are first briefly described.
1. Relighting (relighting) indicates changing a lighting condition of an object in an image, including but not limited to changing a light incident direction, a color temperature, saturation, exposure intensity, and the like of the object.
2. Portrait segmentation, namely, portrait extraction, is to separate a foreground from a background of an image by using an artificial intelligence method. When a portrait is extracted, a person is the foreground.
3. Semantic segmentation is to segment each part of an image based on division of things in the human sense.
4. Ray tracing is a rendering algorithm in three-dimensional computer graphics that traces a "path" of light that starts from a source and irradiates onto an object and then is reflected by the object. Compared with another rendering algorithm, the ray tracing algorithm is of higher computational complexity, but can provide more real light and shadow effect.
5. In a multi-person framing mode, portraits of a plurality of persons are placed in a same background image.
6. SurfaceNet is a full 3D convolutional network constructed by encoding camera parameters together with images in a three-dimensional (three-dimensional, 3D) voxel representation.

With the development of remote video technologies, people have higher requirements on video conferences and hope that online conferences can provide the same real experience as offline conferences. For example, people want to take a group photo as conveniently as at an offline conference, or effect of people having a conference in a same scene can be shown during a video, to produce strong interaction experience. In addition, in a scene of an online conference, sign-in is often required. A host will ask people to turn on a camera and take a screenshot as proof of attendance. Meeting all these requirements needs a plurality of participants to be in one image, namely, a plurality of participants to be in a same frame. To generate strong interaction experience of an offline conference, it is further expected that a same-frame image generated when a plurality of participants are in a same frame is closer to an actual group photo, that is, it is expected that the same-frame image is more natural.

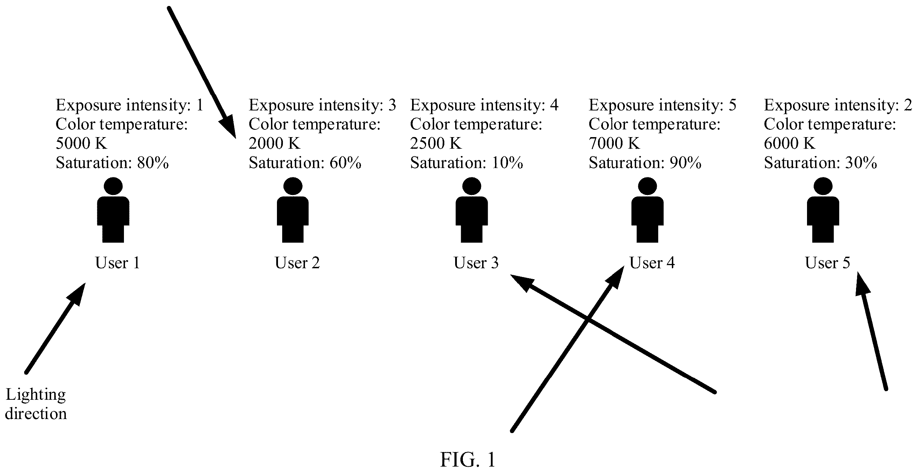

In a virtual conference room, portraits of participants can be synthesized with a scenario of an offline conference, to simulate a real conference scenario, and meet a requirement of people for a sense of reality of an online conference. In the virtual conference room, simple face detection and image cropping and stitching solutions are usually used to implement only a basic function of placing a plurality of participants in a same scene. However, in a video conference, as shown in FIG. 1, in most cases, each person attends the conference in a different place. For example, each person attends the conference at home. Because environments in which persons are located are different, lighting conditions of places in which the persons are located are also different. Lighting directions, exposure intensity, color temperatures, and saturation of participants are obviously different. In this case, directly extracting a portrait of each participant and then synthesizing the portrait with the background result in abnormal lighting and a strong sense of incongruity.

This application provides a relighting method. A picture including portraits of users is input, and a lighting condition that is of each person and that meets a physical rule at a virtual location of the person is obtained through calculation with reference to location information of the user in a virtual background and given light source information, so that a synthesized image is more real and natural.

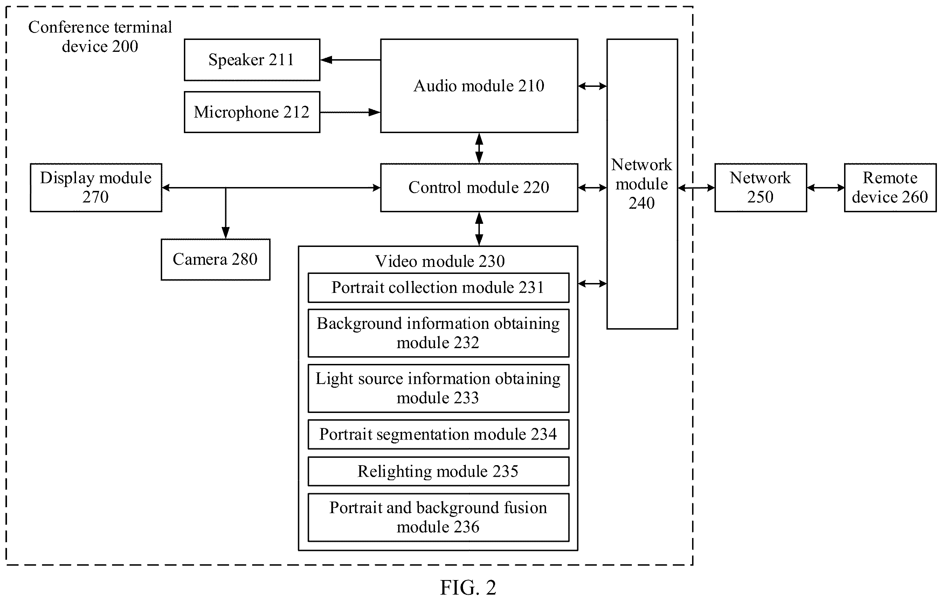

FIG. 2 is a diagram of a system architecture of a video conference according to an embodiment of this application.

A video conference system to which the relighting method provided in this application may be applied includes a conference terminal device 200, a network 250, and a remote device 260. The conference terminal device 200 includes an audio module 210, a control module 220, a video module 230, a network module 240, a display module 270, and a camera 280, and optionally, may further include a speaker 211 and/or a microphone 212. The video module 230 includes a portrait collection module 231, a background information obtaining module 232, a light source information obtaining module 233, a portrait segmentation module 234, a relighting module 235, and a portrait and background fusion module 236.

The remote device 260 is connected to the conference terminal device 200 through the network 250. The remote device 260 may be a device with an image shooting function and a network video function, for example, a notebook computer, a mobile phone, a tablet computer, or a television. One remote device 260 in the figure is merely an example, and there may alternatively be a plurality of remote devices 260.

The network 250 may be the internet (internet).

The conference terminal 200 may be a device with an image shooting function and a network video function, for example, a notebook computer, a mobile phone, a tablet computer, or a television.

The audio module 210 may be connected to the speaker 211 for audio broadcasting, or may be connected to the microphone 212 for intercom with the remote device 260.

The control module 220 is configured to control transmission of video image data and audio data, send collected image data to the video module 230 for processing, and transmit a processed image to the display module 270.

The video module 230 is configured to perform relighting on the collected image data. A specific procedure is described in detail below.

The network module 240 is configured for communication between the conference terminal device 200 and the remote device 260.

The display module 270 is configured to display the processed image, and may be a display of a mobile phone, a notebook computer, a tablet computer, or a television.

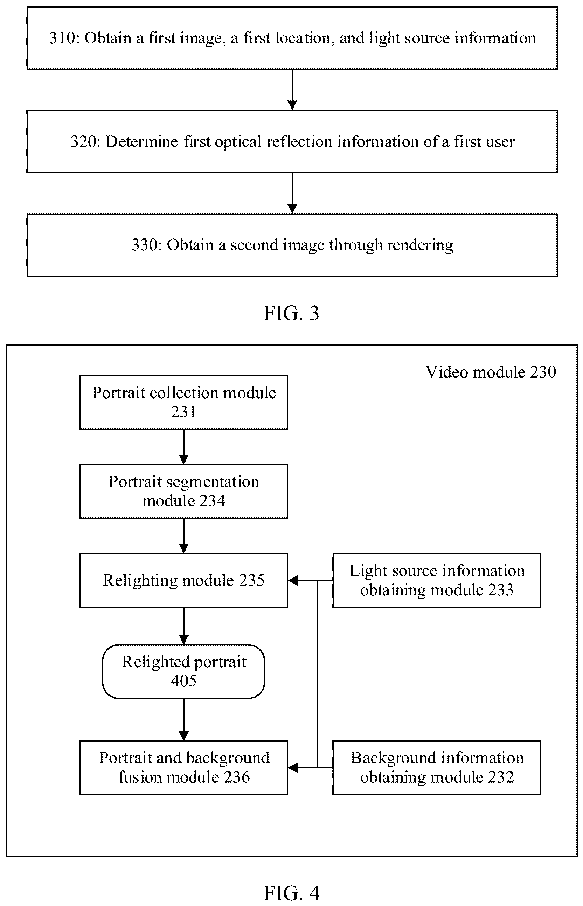

FIG. 3 is an example flowchart of a relighting method according to an embodiment of this application.

310: Obtain a first image, a first location, and light source information.

The first image includes a portrait of a first user, the first location indicates location information of the first user in a preset scene, and the light source information includes a location of a light source in the scene and lighting information of the light source.

It should be understood that the first image is portrait data that does not include a background. In a possible implementation, the first image is a portrait extracted from an image including the background and the portrait.

In a possible application scenario, for a video conference, at least one camera collects, in real time, a picture corresponding to the conference, and then extracts the portrait of the first user from the picture. The picture may include a plurality of users, and the first user is one of the plurality of users. Alternatively, the picture may include only the first user. In a possible application scenario, a picture corresponding to a conference may be pre-stored. During the video conference, a picture that is of a conference access terminal and that includes a portrait, for example, a static portrait picture, a cartoon picture, a three-dimensional (three-dimensional, 3D) portrait model, or a 3D game character, is obtained through a network. Optionally, a user identity document (identity document, ID) of the conference access terminal may alternatively be identified, and a portrait corresponding to the ID may be found from a preset candidate gallery.

It should be understood that the portrait may include a head, an upper body, or a whole body of a person. This is not limited in this application. The portrait may include a portrait picture obtained through background segmentation, a portrait contour image corresponding to segmentation, or contour coordinates.

It should be understood that the first location indicates the location information of the first user in the preset scene, for example, two-dimensional coordinates in a two-dimensional scene, three-dimensional coordinates in a three-dimensional scene, or coordinates or a location number of a virtual seat of the first user.

It should be understood that the light source information in this application may include information about one or more light sources.

320: Determine first optical reflection information of the first user.

The first optical reflection information of the first user is determined based on the first image and the first location, where the first optical reflection information indicates a light reflection status of a body surface of the first user at the first location. For example, the first optical reflection information may be a body reflectivity of the first user and a body surface normal vector of the first user in a global coordinate system.

330: Obtain a second image through rendering.

The second image is obtained through rendering based on the first image, the light source information, and the first optical reflection information, where the second image includes a portrait obtained through relighting on the first user at the first location in the scene based on the light source information.

For example, the second image may be obtained through rendering in a manner of ray tracing or by using a neural network model.

FIG. 4 is a diagram of an architecture of a video module according to an embodiment of this application.

The video module 230 includes the portrait collection module 231, the background information obtaining module 232, the light source information obtaining module 233, the portrait segmentation module 234, the relighting module 235, and the portrait and background fusion module 236.

The portrait collection module 231 is configured to collect a picture including a portrait. One or more pictures may be collected.

The portrait segmentation module 234 is configured to extract a portrait from a picture by using a portrait segmentation technology. The portrait may include a head, an upper body, or a whole body of a user.

The background information obtaining module 232 is configured to obtain a background picture on which relighting is to be performed and location information of the user in the background picture.

The light source information obtaining module 233 is configured to obtain a coordinate location of a light source in a scene and lighting information of the light source. The lighting information of the light source includes any one or more of light intensity, a color temperature, an incident direction, and saturation of the light source.

The relighting module 235 is configured to perform relighting on the portrait of the user based on light source information, the portrait of the user, and the location information, to generate a relighted portrait 405.

The portrait and background fusion module 236 is configured to fuse the portrait obtained through relighting with a background, to generate a final image.

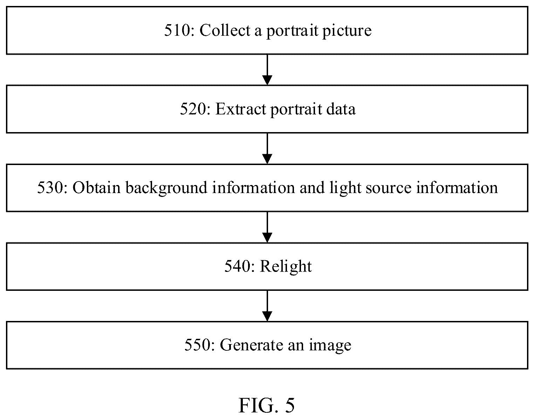

FIG. 5 is an example flowchart of another relighting method according to an embodiment of this application. A light source in this embodiment of this application is a fixed light source.

510: Collect a portrait picture.

The portrait collection module 231 collects one or more pictures including a portrait. The picture may be a two-dimensional picture, or may be a three-dimensional picture. For a three-dimensional picture, a specific angle of view may be selected, and then the three-dimensional picture is converted into a two-dimensional picture. Each picture may include one or more portraits. This is not limited in this application.

It should be understood that, because a video includes a plurality of pictures that are consecutive in time, the picture may be collected at a frame rate of the video, or the picture may be collected at a preset time interval.

In a possible application scenario, for a multi-party video conference, each remote device 260 has one camera that collects a corresponding real-time picture during the conference. The local conference terminal device 200 obtains a picture taken by a camera of a local user and a real-time video conference picture of each party from the remote device 260. There may be one person or a plurality of persons in each party's conference room, that is, a picture collected by a conference terminal includes one or more participants.

In another possible application scenario, for a multi-party video conference, a picture corresponding to each party's conference terminal device may be pre-stored. During the video conference, a picture that corresponds to each conference access terminal and that includes a portrait, for example, a static portrait picture, a cartoon picture, a three-dimensional (three-dimensional, 3D) portrait model, or a 3D game character, is obtained through a network. Optionally, a user identity (identity document, ID) of each party's conference access terminal may alternatively be identified, and a portrait photo corresponding to the ID may be found from a preset candidate gallery.

In another possible application scenario, for a conference scenario in which there are a plurality of persons and a plurality of conference devices in a conference room, only pictures collected by some conference devices may be obtained.

520: Extract portrait data.

A portrait segmentation technology is used to extract portrait data from each picture. The portrait may include a head, an upper body, or a whole body of a person. This is not limited in this application. The portrait data includes a portrait picture obtained through segmentation, a portrait contour image corresponding to segmentation, or contour coordinates. When there is only one portrait in the picture, a portrait of one person may be extracted. When there are a plurality of portraits in the picture, at least one portrait may be extracted.

A deep learning model, for example, PortraitFCN, may be used for portrait segmentation. In some possible application scenarios, embodiments of this application may alternatively be considered as an overall model, and portrait segmentation is one of neural network modules.

530: Obtain background information and light source information.

The background information includes a background picture used to finally generate a relighted image and location information of a user in the background picture, for example, coordinates or a location number of a virtual seat of the user in the conference room.

The background picture may be a common two-dimensional image, for example, a picture of a classroom, a conference room, or a study with a desk. The background may alternatively be a three-dimensional virtual background, for example, a room model with a seat, for example, a classroom or a conference room, output through three-dimensional modeling.

Location information of the user in the background picture, for example, coordinates of the virtual seat, may be preset. For example, sorting may be performed based on a user ID, sorting may be performed based on access time, sorting may be performed based on an initial letter of a user name, or the like. Optionally, the location information may alternatively be input by the user in a customized manner, or a seat may be automatically recognized and given coordinates according to a seat recognition algorithm after a virtual background is selected.

The fixed light source in embodiments of this application may include one light source, or may include a plurality of light sources. The light source information includes a coordinate location of the light source and lighting information of the light source, and the lighting information of the light source includes any one or more of light intensity, a color temperature, an incident direction, and saturation of the light source.

The light source information may be extracted from an input lighted reference image. For example, the reference image may be the foregoing background picture. For example, the light source information in the reference lighted picture is extracted through the neural network. The light source information may alternatively be input in a parameterized form. For example, information such as three-dimensional coordinates, light intensity, a color temperature, or saturation of a light source is specified.

540: Relight.

A global coordinate system is established, and then the portrait is relighted based on the light source information, the portrait of the user, and the location information. A specific process is described in detail later.

550: Generate an image.

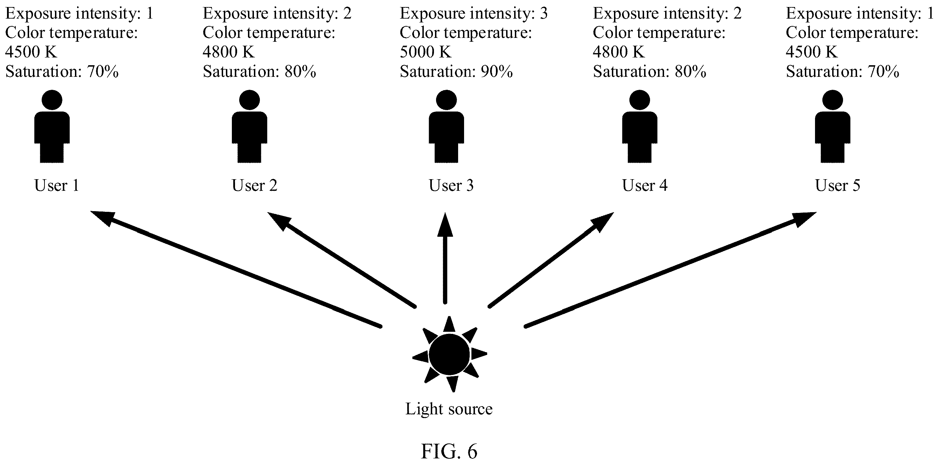

A background picture at each location is fused with the portrait obtained through relighting based on the location of each portrait in the background picture, to generate the final image. FIG. 6 is a diagram of effect of a relighted image according to an embodiment of this application. For a single light source, corresponding relighted portrait effect is generated based on a location of a background image of each person. For example, for leftmost user 1, exposure intensity is 1, a color temperature is 4500 Kelvins (K), and saturation is 70%. For user 2, exposure intensity is 2, a color temperature is 4800 K, and saturation is 80%. For user 3, exposure intensity is 3, a color temperature is 5000 K, and saturation is 90%. For user 4, exposure intensity is 2, a color temperature is 4800 K, and saturation is 80%. For user 5, exposure intensity is 1, a color temperature is 4500 K, and saturation is 70%. Lighting directions corresponding to users 1 to 5 are shown in FIG. 6. Relighting effect of different users in a virtual background is basically the same as effect of the users actually sitting at locations under corresponding light source conditions.

It should be understood that a video includes a plurality of pictures that are consecutive in time. To enable an action of a user to be naturally displayed on the display module 270, all or some of the steps in the method in FIG. 5 may be repeatedly performed at a preset time interval. For example, the background information and the light source information remain unchanged, the portrait image is re-collected at an interval of 1 millisecond (ms), and steps 520, 540, and 550 are performed.

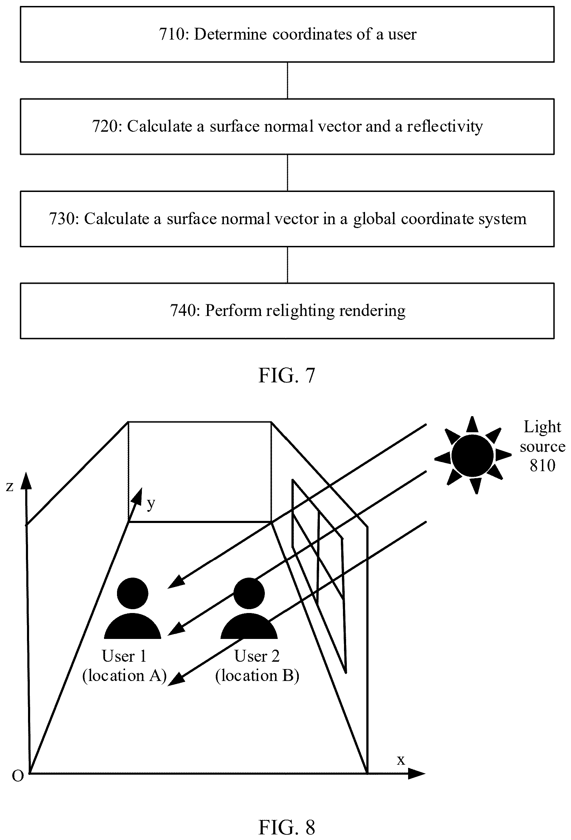

FIG. 7 is an example flowchart of relighting according to an embodiment of this application.

710: Determine coordinates of a user.

Establish a global coordinate system based on a background picture and light source information. In addition, coordinates of the user in the global coordinate system are obtained based on location information of the user.

FIG. 8 is a diagram of determining coordinates of a user according to an embodiment of this application. FIG. 8 is a background picture of a conference room including two users. A global three-dimensional coordinate system xyz is established with a lower left corner O of the conference room as an origin. A light source 810 irradiates user 1 and user 2 through a window. A location A and a location B are two preset virtual seats. User 1 is located at the location A, and user 2 is located at the location B. For example, if coordinates of A are (1, 1, 0), and coordinates of B are (2, 1, 0), coordinates of user 1 are (1, 1, 0), and coordinates of user 2 are (2, 1, 0).

It should be understood that, in this embodiment of this application, that the coordinates of the user are determined based on the three-dimensional coordinate system is merely an example, and a two-dimensional coordinate system may alternatively be used. This is not limited in this application.

720: Calculate a surface normal vector and a reflectivity.

Surface normal vector and reflectivity information of each user is extracted based on an input portrait picture through a neural network. In this case, a calculated surface normal vector of the user is a vector representation centered on the user.

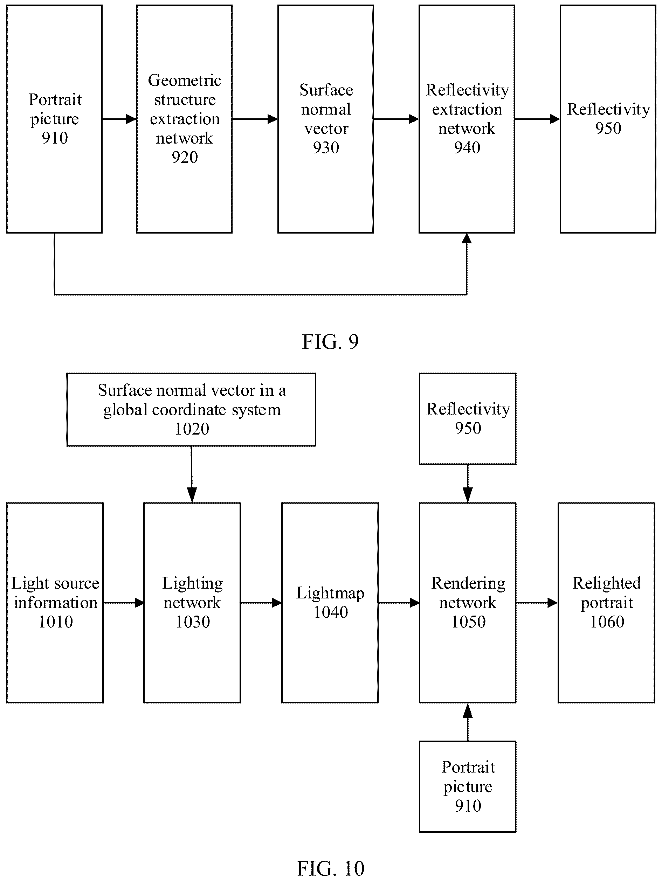

In some possible implementations, the surface normal vector and reflectivity information may be extracted through a neural network structure. FIG. 9 is a diagram of extracting a surface normal vector and a reflectivity according to an embodiment of this application. An RGB (red green blue) portrait picture 910 is input, a surface normal vector 930 is extracted through a geometric structure extraction network 920, and then a reflectivity 950 of each part of a user body is estimated through a reflectivity extraction network 940. The geometric structure extraction network 920 and the reflectivity extraction network 940 may be convolutional neural networks (convolutional neural networks, CNN), recursive neural networks (recursive neural network, RNN), long short-term memory (long short-term memory, LSTM) networks, or the like. Specific types of the geometric structure extraction network 920 and the reflectivity extraction network 940 are not limited in this application. The geometric structure extraction network 920 and the reflectivity extraction network 940 may alternatively be considered as a neural network model as a whole.

730: Calculate a surface normal vector in the global coordinate system.

The surface normal vector obtained through calculation in step 720 is a vector representation centered on the portrait. In embodiments of this application, the surface normal vector of the user further needs to be translated into a vector representation in the global coordinate system based on coordinates of the user in the global coordinate system.

In some possible implementations, the portrait picture and the coordinates of the user in the global coordinate system may alternatively be directly input into the neural network, to directly obtain the body reflectivity of the user and the body surface normal vector of the user in the global coordinate system.

740: Perform relighting rendering.

For example, relighting rendering may be performed on the portrait through the neural network. FIG. 10 is a diagram of relighting rendering according to an embodiment of this application. First, a light source information 1010 and a surface normal vector 1020 in a global coordinate system are input to a lighting network 1030 to generate a lightmap 1040. The lightmap 1040 may be a diffuse reflection lighting map and a specular reflection lighting map. The lightmap 1040, the reflectivity 950, and the portrait picture 910 are input into a rendering network 1050, to generate a relighted portrait 1060. The lighting network 1030 and the rendering network 1050 may be neural networks such as CNNs, RNNs, or LSTMs.

Optionally, the light source information 1010, the surface normal vector 1020 in the global coordinate system, the reflectivity 950, and the portrait picture 910 may be further used to implement relighting rendering of the portrait by using a ray tracing technology.

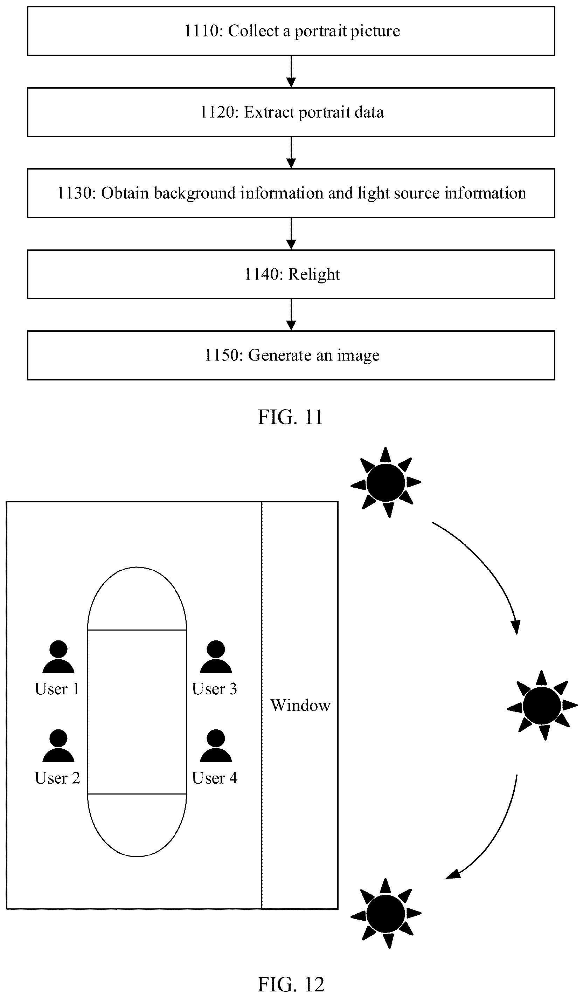

FIG. 11 is example flowchart of another relighting method according to an embodiment of this application. A light source in this embodiment of this application is a variable light source.

1110: Collect a portrait picture.

Refer to step 510 in FIG. 5. Details are not described again in this application.

1120: Extract portrait data.

Refer to step 520 in FIG. 5. Details are not described again in this application.

1130: Obtain background information and light source information.

The background information includes a background picture used to finally generate a relighted image and location information of a user in the background picture, for example, coordinates or a location number of a virtual seat of the user in a conference room.

The background picture may be a common two-dimensional image, for example, a picture of a classroom, a conference room, or a study with a desk. The background may alternatively be a three-dimensional virtual background, for example, a room model with a seat, for example, a classroom or a conference room, output through three-dimensional modeling.

Location information of the user in the background picture, for example, coordinates of the virtual seat, may be preset. For example, sorting may be performed based on a user ID, sorting may be performed based on access time, sorting may be performed based on an initial letter of a user name, or the like. Optionally, the location information may alternatively be input by the user in a customized manner, or a seat may be automatically recognized and given coordinates according to a seat recognition algorithm after a virtual background is selected.

The variable light source in embodiments of this application may include one light source, or may include a plurality of light sources. FIG. 12 is a diagram of a variable light source according to an embodiment of this application. In a conference room with light, a location and/or intensity of a variable light source change/changes with time. In this embodiment of this application, dynamic visual effect brought by the variable light source may be simulated.

Light source information includes a coordinate location of the light source and lighting information of the light source, and the lighting information of the light source includes any one or more of light intensity, a color temperature, and an incident direction of the light source, and saturation brought by lighting. Both the coordinate location of the light source and the lighting information of the light source may change with time.

In a possible implementation of the variable light source, a function of the light source that changes with time may be preset. For example, f(t) indicates a light source function, and f(t) may be a continuous function that changes with time, and is used to simulate light source effect of the sun rising in the east and falling in the west. Optionally, f(t) may alternatively be a segment function, t is time, and t may include three time periods: morning, noon, and night.

In another possible implementation of the variable light source, a mapping table of the light source that changes with time may be preset. The time t is read by a system or input by the user. Corresponding light source information (a light source location, intensity, saturation, and the like) is obtained based on the currently obtained time t through the preset lookup table.

In another possible implementation of the variable light source, the light source may be represented through a plurality of different light source pictures, and each picture represents one piece of light source information corresponding to time. For example, there is a light source picture in the morning, at noon, and at night each to indicate corresponding light source information.

1140: Relight.

Refer to the descriptions of step 540 in FIG. 5 and FIG. 7. Details are not described again in this application.

1150: Generate an image.

Refer to the descriptions of step 550 in FIG. 5. Details are not described again in this application.

Because the variable light source changes with time, in embodiments of this application, the foregoing step 1110 to step 1150 may be repeated at a preset time cycle T or a preset non-fixed time point, to update a location and/or lighting information of the light source at the corresponding moment in relighting calculation, and perform relighting. For example, the fixed cycle T may be 30 milliseconds (ms) to indicate real-time relighting, or may be 30 minutes (min). For the preset non-fixed time period, for example, corresponding time points t=1, 2, 5, 8, ... may be separately used as corresponding time points at which the light source information is updated to perform relighting.

It should be understood that a video includes a plurality of pictures that are consecutive in time. To enable an action of a user to be naturally displayed on the display module 270, all or some of the steps in the method in FIG. 11 may be repeatedly performed at a preset time interval. For example, a portrait image is re-collected at an interval of 1 ms, the light source information is updated at an interval of the fixed cycle T, and step 1110 to step 1150 are performed.

FIG. 6 is used as an example to describe effect of performing relighting by using a variable light source in embodiments of this application. At a moment 1 (for example, 10:00 a.m.), for leftmost user 1, the exposure strength is 1, the color temperature is 4500 K, and the saturation is 70%. For a moment 2 (for example, 10:10 a.m.), light source intensity is higher. For leftmost user 1, the exposure intensity is 2, the color temperature is 6000 K, and the saturation is 70%.

It should be understood that, in embodiments of this application, performing relighting on the user during the video conference is merely an example. The method provided in embodiments of this application may be further used to generate portrait data of the user at specific coordinates and under a specific light source, without synthesizing with a background image, for example, an image of user 1 in a center of a square at 12:00 noon.

The background picture in embodiments of this application may alternatively be a dynamic background picture, and some dynamic pictures have changes in light and shadow and light source. For example, if the moon in the background image slowly rises, light distribution on a person in the image, especially an incident direction of light, should also slowly change with a height of the moon. In comparison with the moon near a sea level, the moon becomes brighter as it rises. Therefore, a human body should gradually become brighter. In a possible scenario, there is a periodic change of light in a dynamic background, for example, periodic reflection of a water wave. The background image creates effect of a person lying on the water wave, and the background image may also be periodically used to perform relighting and output a result of periodic changes of lighting on the person with the reflection of water wave.

In a possible application scenario, the method provided in this application may be applied to a future virtual conference room. It is ensured that a face of a user joining a conference can be captured. In a three-dimensional virtual conference, each person may preset a three-dimensional body model of the person, a two-dimensional model is simulated based on a normal vector calculated through a neural network, SurfaceNet, and then, a face of the three-dimensional model is obtained through fusion, so that each person has a body featured by the face of the person in a three-dimensional virtual world. In this case, lighting on each person in the three-dimensional conference room may be adjusted in real time based on light source information of an environment in which the person is located, to present better and more real three-dimensional virtual conference effect.

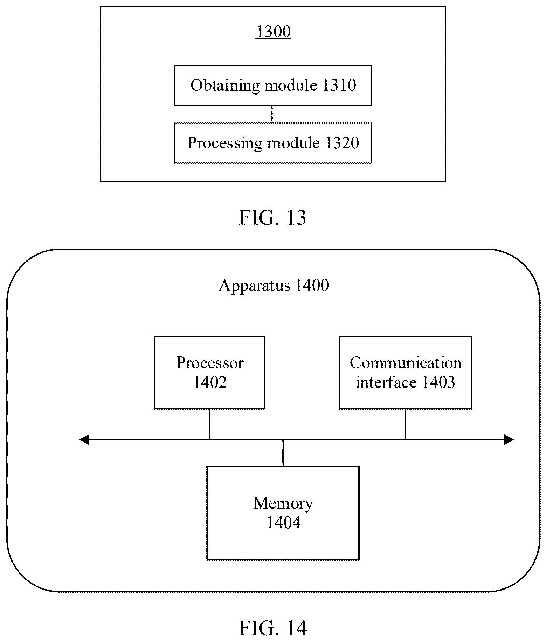

The foregoing describes the relighting method according to embodiments of this application. The following describes an apparatus and a device according to embodiments of this application with reference to FIG. 13 and FIG. 14.

Embodiments of this application further provide a computer storage medium. The computer storage medium stores program instructions. When the program is executed, some or all of the steps of the relighting method in embodiments corresponding to FIG. 3, FIG. 5, FIG. 7, and FIG. 9 to FIG. 11 may be included.

FIG. 13 is a diagram of an example of a structure of a computer apparatus 1300 according to an embodiment of this application. The computer apparatus 1300 includes an obtaining module 1310 and a processing module 1320.

The obtaining module 1310 is configured to: obtain a first image, a first location, a background, and light source information, and perform 310 in the method in FIG. 3, 510 and 530 in the method in FIG. 5, and 1110 and 1130 in the method in FIG. 11.

The processing module 1320 is configured to: obtain a relighted image through rendering based on the first image, the light source information, and light reflection information of a user, and perform some or all of the steps in the method in FIG. 3, the method in FIG. 5, the method in FIG. 7, and the method in FIG. 9 to FIG. 11.

FIG. 14 is a diagram of an example of a structure of another computer apparatus 1400 according to an embodiment of this application. The computer apparatus 1400 includes a processor 1402, a communication interface 1403, and a memory 1404. An example of the computer apparatus 1400 is a chip. Another example of the computer apparatus 1400 is a computing device.

The methods disclosed in embodiments of this application may be applied to the processor 1402, or may be implemented by the processor 1402. The processor 1402 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, any conventional processor, or the like. In an implementation process, steps in the foregoing methods can be implemented by using a hardware integrated logic circuit in the processor 1402, or by using instructions in a form of software. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module.

The memory 1404 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the method and apparatus described herein is intended to include but is not limited to these memories and any memory of another appropriate type.

The processor 1402, the memory 1404, and the communication interface 1403 may communicate with each other through a bus. The memory 1404 stores executable code. The processor 1402 reads the executable code in the memory 1404 to perform a corresponding method. The memory 1404 may further include another software module required for running a process, such as an operating system. The operating system may be LINUX^{™}, UNIX^{™}, WINDOWS^{™}, or the like.

For example, the executable code in the memory 1404 is used to implement the methods shown in FIG. 3, FIG. 5, FIG. 7, and FIG. 9 to FIG. 11, and the processor 1402 reads the executable code in the memory 1404 to perform the methods shown in FIG. 3, FIG. 5, FIG. 7, and FIG. 9 to FIG. 11.

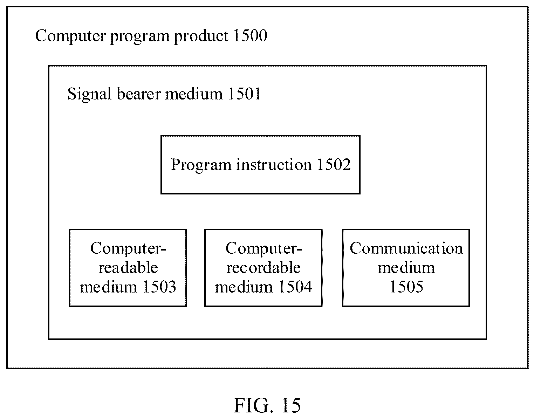

In some embodiments of this application, the disclosed method may be implemented as computer program instructions encoded on a computer-readable storage medium or encoded on another non-transitory medium or product in a machine-readable format. FIG. 15 schematically shows a conceptual partial view of an example computer program product arranged according to at least some embodiments shown herein. The example computer program product includes a computer program for executing a computer process on a computing device. In an embodiment, the example computer program product 1500 is provided by using a signal bearer medium 1501. The signal bearer medium 1501 may include one or more program instructions 1502. When the program instructions are run by one or more processors, the functions or some functions described in the methods shown in FIG. 3, FIG. 5, FIG. 7, and FIG. 9 to FIG. 11 may be provided. Therefore, for example, refer to embodiments shown in FIG. 3, FIG. 5, FIG. 7, and FIG. 9 to FIG. 11. One or more features may be borne by one or more instructions associated with the signal bearer medium 1501.

In some examples, the signal bearer medium 1501 may include a computer-readable medium 1503, for example but not limited to, a hard disk drive, a compact disk (CD), a digital video disc (DVD), a digital tape, a memory, a read-only memory (read-only memory, ROM), or a random access memory (random access memory, RAM). In some implementations, the signal bearer medium 1501 may include a computer-recordable medium 1504, for example but not limited to, a memory, a read/write (R/W) CD, or an R/W DVD. In some implementations, the signal bearer medium 1501 may include a communication medium 1505, such as but not limited to, a digital and/or analog communication medium (for example, an optical fiber cable, a waveguide, a wired communication link, or a wireless communication link). Therefore, for example, the signal bearer medium 1501 may be conveyed by the communication medium 1505 in a wireless form (for example, a wireless communication medium that complies with the IEEE 802.11 standard or another transmission protocol). The one or more program instructions 1502 may be, for example, computer-executable instructions or logic implementation instructions. In some examples, the computing device may be configured to provide various operations, functions, or actions in response to the program instructions 1502 that are delivered to the computing device by using one or more of the computer-readable medium 1503, the computer-recordable medium 1504, and/or the communication medium 1505. It should be understood that the arrangement described herein is merely used as an example. Therefore, it should be understood by a person skilled in the art that other arrangements and other elements (for example, machines, interfaces, functions, orders, and function groups) can be used instead, and that some elements may be omitted together based on a desired result. In addition, many of the described elements are function entities that can be implemented as discrete or distributed components, or implemented in any appropriate combination at any appropriate location in combination with another component.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relighting method, comprising:
obtaining a first image, a first location, and light source information, wherein the first image comprises a portrait of a first user, the first location indicates location information of the first user in a preset scene, and the light source information comprises a location of a light source in the scene and lighting information of the light source;
determining first optical reflection information of the first user based on the first image and the first location, wherein the first optical reflection information indicates a light reflection status of a body surface of the first user at the first location; and
obtaining a second image through rendering based on the first image, the light source information, and the first optical reflection information, wherein the second image comprises a portrait obtained through relighting on the first user at the first location in the scene based on the light source information.

2. The method according to claim 1, wherein the method further comprises:
obtaining a background image, wherein the background image is an image comprising the scene, and the first location is a location of the portrait of the first user in the background image; and
generating a first composite image based on the background image and the second image, wherein the first composite image comprises an effect drawing of the first user at the first location in the background image.

3. The method according to claim 2, wherein determining the first optical reflection information of the first user based on the first image and the first location comprises:
determining a body reflectivity of the first user and a body surface normal vector of the first user in a global coordinate system based on the first image and the first location, wherein the global coordinate system is a coordinate system established based on the background image.

4. The method according to claim 2 or 3, wherein the method further comprises:
obtaining a third image and a second location, wherein the third image comprises a portrait of a second user, and the second location indicates location information of the second user in the scene;
determining second optical reflection information of the second user based on the third image and the second location, wherein the second optical reflection information indicates a light reflection status of a body surface of the second user at the second location;
determining a fourth image based on the third image, the light source information, and the second optical reflection information, wherein the fourth image comprises a portrait obtained through relighting on the second user at the second location in the scene based on the light source information; and
generating a second composite image based on the background image, the second image, and the fourth image, wherein the second composite image comprises an effect drawing on which the first user and the second user are at corresponding locations in the background image.

5. The method according to any one of claims 1 to 4, wherein the light source information comprises a parameter or an image related to the light source.

6. The method according to any one of claims 1 to 5, wherein the light source information changes with time.

7. The method according to any one of claims 1 to 6, wherein the lighting information of the light source comprises any one or more of light intensity, a color temperature, an incident direction, and saturation of the light source.

8. The method according to any one of claims 1 to 6, wherein obtaining the second image through rendering based on the first image, the light source information, and the first optical reflection information comprises:
obtaining the second image through rendering in a manner of ray tracing or by using a neural network model based on the first image, the light source information, and the first optical reflection information.

9. A computer apparatus, comprising:
an obtaining module, configured to obtain a first image, a first location, and light source information, wherein the first image comprises a portrait of a first user, the first location indicates location information of the first user in a preset scene, and the light source information comprises a location of a light source in the scene and lighting information of the light source; and
a processing module, configured to determine first optical reflection information of the first user based on the first image and the first location, wherein the first optical reflection information indicates a light reflection status of a body surface of the first user at the first location, wherein
the processing module is further configured to obtain a second image through rendering based on the first image, the light source information, and the first optical reflection information, wherein the second image comprises a portrait obtained through relighting on the first user at the first location in the scene based on the light source information.

10. The apparatus according to claim 9, wherein the obtaining module is further configured to obtain a background image, wherein the background image is an image comprising the scene, and the first location is a location of the portrait of the first user in the background image; and
the processing module is further configured to generate a first composite image based on the background image and the second image, wherein the first composite image comprises an effect drawing of the first user at the first location in the background image.

11. The apparatus according to claim 10, wherein the processing module is specifically configured to:
determine a body reflectivity of the first user and a body surface normal vector of the first user in a global coordinate system based on the first image and the first location, wherein the global coordinate system is a coordinate system established based on the background image.

12. The apparatus according to claim 10 or 11, wherein the obtaining module is further configured to obtain a third image and a second location, wherein the third image comprises a portrait of a second user, and the second location indicates location information of the second user in the scene;
the processing module is further configured to determine second optical reflection information of the second user based on the third image and the second location, wherein the second optical reflection information indicates a light reflection status of a body surface of the second user at the second location;
the processing module is further configured to determine a fourth image based on the third image, the light source information, and the second optical reflection information, wherein the fourth image comprises a portrait obtained through relighting on the second user at the second location in the scene based on the light source information; and
the processing module is further configured to generate a second composite image based on the background image, the second image, and the fourth image, wherein the second composite image comprises an effect drawing on which the first user and the second user are at corresponding locations in the background image.

13. The apparatus according to any one of claims 9 to 12, wherein the light source information comprises a parameter or an image related to the light source.

14. The apparatus according to any one of claims 9 to 13, wherein the light source information changes with time.

15. The apparatus according to any one of claims 9 to 14, wherein the lighting information of the light source comprises any one or more of light intensity, a color temperature, an incident direction, and saturation of the light source.

16. The apparatus according to any one of claims 9 to 15, wherein the processing module is specifically configured to obtain the second image through rendering in a manner of ray tracing or by using a neural network model based on the first image, the light source information, and the first optical reflection information.

17. A computer device, comprising a processor, wherein the processor is configured to: be coupled to a memory, and read and execute instructions and/or program code in the memory, to perform the method according to any one of claims 1 to 8.

18. A chip system, comprising a logic circuit, wherein the logic circuit is configured to: be coupled to an input/output interface, and transmit data through the input/output interface, to perform the method according to any one of claims 1 to 8.

19. A computer-readable medium, wherein the computer-readable medium stores program code, and when the computer program code is run on a computer, the computer is enabled to perform the method according to any one of claims 1 to 8.
